# FASCICULE DE BREVET EUROPEEN

(11) **EP 0 375 038 B1**
(45) Date de publication et mention de la délivrance du brevet: **24.11.1993**
(21) Numéro de dépôt: 89203187.3
(22) Date de dépôt: 14.12.1989
(51) Int. Cl.: H04N 5/57

(54) **Appareil de reproduction d'image vidéo muni d'un réglage de contraste, et procédé de réglage du contraste d'un tel appareil de reproduction**
Videobildwiedergabevorrichtung mit einer Kontrastregeleinheit und Verfahren zur Kontrasteinstellung einer solchen Wiedergabevorrichtung
Video picture reproducing apparatus comprising a contrast control, and method for the contrast adjustment of such a reproducing apparatus

(30) Priorité: 20.12.1988 FR 8816838
(43) Date de publication de la demande: 27.06.1990
(73) Titulaire: PHILIPS ELECTRONIQUE GRAND PUBLIC, 92150 Suresnes (FR); Philips Electronics N.V., 5621 BA Eindhoven (NL)
(72) Inventeur: Vilard, Philippe - Société Civile S.P.I.D., F-75007 Paris (FR)
(74) Mandataire: Caron, Jean

(56) Documents cités:
- EP-A- 0 149 334
- EP-A- 0 289 236
- GB-A- 2 155 739
- US-A- 3 147 341
- US-A- 4 209 808
- US-A- 4 253 110
- PATENT ABSTRACTS OF JAPAN, vol. 5, no. 125 (E-69)[797], 12 août 1981; & JP-A-56 62 487 (SONY) 28-05-1981
- PATENT ABSTRACTS OF JAPAN, vol. 5, no. 59 (E-53)[731], 22 avril 1981; & JP-A-56 10 781 (TOKYO SHIBAURA DENKI) 03-02-1981

## Description

La présente invention concerne un appareil de reproduction d'image sur un tube à rayons cathodiques, muni d'une part d'un circuit de traitement des signaux vidéo assurant, entre autres, une préamplification de ces signaux soit avec un gain maximal déterminé, soit avec un gain réduit par rapport au gain maximal dans le but de modifier le contraste de l'image, au moyen d'une tension de commande variable appliquée à une borne de commande de contraste dudit circuit de traitement, appareil muni d'autre part d'un circuit de contrôle du contraste comprenant :
- un dispositif de comparaison des valeurs de crête du signal vidéo (de chacun des signaux vidéo R, V, B), avec un seuil de référence, le signal issu du dépassement de ce seuil étant appliqué, après intégration, à ladite borne de commande de contraste,
- un dispositif de réglage manuel du contraste délivrant un signal également appliqué à ladite borne de commande de contraste.

Le réglage de contraste d'une image vidéo reproduite sur un tube à rayons cathodiques vise à satisfaire plusieurs exigences d'ordre technique ou esthétique.

En premier lieu, il est d'usage courant de limiter la valeur moyenne du courant de faisceau électronique du tube, principalement en vue d'assurer une durée de vie de ce tube qui soit conforme aux prévisions spécifiées par son constructeur (effet de vieillissement prématuré des cathodes si le courant moyen de faisceau est trop élevé) et également pour que les circuits produisant la très haute tension puissent fonctionner correctement en toute sécurité. Au cas où une image particulièrement lumineuse est à reproduire, il y a donc lieu de réduire l'amplification du signal video tout en maintenant le niveau du noir jusqu'à obtenir un courant de faisceau ne dépassant pas la limite fixée. Ceci revient à dire que l'on produit une réduction automatique du contraste de l'image, si cela est nécessaire, pour ne pas dépasser une limite déterminée de courant moyen de faisceau. Ces considérations sont aussi bien valables qu'il s'agisse d'une reproduction monochrome, ou d'une reproduction en couleur, cas dans lequel par l'expression "courant moyen de faisceau" il faut comprendre en réalité la somme des courants des trois faisceaux électroniques correspondant aux trois canons du tube image couleur.

En second lieu, et selon une pratique plus récente, on utilise également un dispositif supplémentaire de réduction automatique de contraste qui entre en action si dans certaines images se trouvent des portions trop lumineuses pour être correctement reproduites, même si ces portions ne présentent qu'une faible proportion de surface par rapport à la surface totale de l'image (et n'influencent donc pas de manière significative le courant moyen de faisceau).

La cause du défaut de reproduction mentionné réside principalement dans le fait que lors de la réception d'une portion d'image exagérément lumineuse, le signal correspondant produit une saturation de l'amplificateur vidéo, saturation qui, suivie d'un délai de désaturation non négligeable, produit un halo inacceptable sur l'image en bordure desdites portions d'image. Un autre défaut associé à des portions d'image trop lumineuses consiste en une déformation géométrique du reste de l'image, défaut qui provient de la surcharge momentanée du dispositif de balayage de lignes. On aurait pu penser à effectuer un écrêtage du signal vidéo pour limiter la luminosité de ces portions exceptionnelles d'images, mais cela conduirait à une coloration inacceptable de ces portions d'image puisque l'écrêtage en question modifierait les proportions respectives des signaux R, V et B par rapport aux proportions originales. En pratique, on est donc conduit à agir à nouveau sur le contraste pour ramener le niveau de signal vidéo des portions les plus lumineuses de l'image à une limite prédéterminée. Un tel dispositif de réduction automatique de gain est utilisé, qu'il s'agisse de reproduction monochrome ou en couleur.

On prévoit encore, en général, de mettre à la disposition de l'utilisateur une commande manuelle de contraste de manière à lui permettre , au même titre que par les réglages de luminosité et de couleur, d'adapter la reproduction aux circonstances extérieures (luminosité ambiante) et aussi à son goût personnel.

Un exemple de réglage automatique du contraste en fonction de la lumière ambiante, pour un téléviseur, est connu du document US-A-3 147 341 qui propose, dans ce but, d'agir sur le circuit de contrôle automatique de gain des étages radiofréquence et fréquence intermédiaire (FI). Actuellement, on préfère cependant travailler à niveau de signal constant à la sortie de l'étage FI de manière à faire fonctionner les étages qui suivent dans des conditions optimales pour lesquelles ces étages ont été conçus.

Une difficulté est apparue en ce qui concerne le réglage de contraste du fait que les multiples actions, automatiques et manuelle, aboutissent toutes à modifier la tension d'une unique borne de commande de contraste du circuit de traitement des signaux vidéo. Dans la mesure même où on veut augmenter l'efficacité des corrections automatiques on aboutit à une réduction de l'effet de la commande manuelle au point que dans la plupart des cas il existe une plage du réglage manuel dans laquelle aucun effet visible n'est obtenu, car l'action sur cette commande est compensée par les dispositifs automatiques de limitation. De ce fait, la commande de réglage du contraste n'est même plus prévue sur le boîtier de télécommande, mais seulement placée sur le téléviseur lui-même.

La présente invention a pour but de proposer une solution à cette difficulté, solution qui puisse être facilement mise en oeuvre dans un appareil commandé à distance et donc sous la forme d'un réglage par un circuit du type potentiomètre électronique.

A cet effet, selon l'invention, un appareil de reproduction d'image vidéo est caractérisé en ce que le gain d'amplification nominal du signal vidéo est suffisamment élevé pour que, pour la majorité des images reçues, les valeurs de crête du signal vidéo (de chacun des signaux vidéo R, V, B) atteignent ledit seuil de référence, et en ce que ledit seuil de référence étant réglable, la commande de variation de ce seuil constitue le dispositif de réglage manuel du contraste.

L'invention repose sur l'idée d'utiliser la correction automatique de contraste basée sur la détection des portions d'image les plus lumineuses non plus en tant que correction exceptionnelle pour une minorité des images reçues, mais plutôt en tant que moyen de réglage permanent pour une majorité des images, ce qui est obtenu en augmentant le gain de l'amplificateur vidéo (et éventuellement du préamplificateur).

Dans ces conditions, un dispositif de commande manuelle de contraste qui, selon l'invention, agit sur le seuil de référence, est plus efficace que les dispositifs de réglage connus car il conduit à un effet immédiatement perceptible par l'utilisateur. De plus, l'invention est particulièrement aisée à mettre en oeuvre dans un appareil de réception d'images en couleur du fait que le réglage intervient par l'action d'une seule variation de tension et non pas par une variation de trois tensions (une sur chacun des signaux R, V, B).

Ainsi, un mode avantageux de mise en oeuvre de l'invention est caractérisé en ce que le dispositif de réglage manuel du contraste comprend un microprocesseur délivrant des trains d'impulsions rectangulaires, ces impulsions rectangulaires fournissant après filtration et amplification ledit seuil de référence.

Dans le cas d'un appareil muni d'une télécommande, on prévoit avantageusement que cette télécommande soit munie d'au moins une touche de commande de variation de contraste, et que les trains d'impulsions rectangulaires délivrés par le microprocesseur soient modifiés en réponse à l'action sur ladite touche de commande, au moyen du signal transmis par la télécommande.

L'utilisation d'un circuit de traitement des signaux vidéo sous forme de circuit intégré s'est pratiquement généralisée dans les téléviseurs actuels en raison des nombreux avantages qui en découlent : gain de place, performances accrues, simplification de la construction, entraînant une réduction du prix de l'appareil. Dans le cas où le circuit intégré video est muni d'un limiteur de blanc intégré dont la valeur du seuil de limitation de blanc peut être définie à partir de l'extérieur, il est avantageusement muni de moyens pour faire varier ladite valeur du seuil en relation avec l'actionnement de la commande de contraste par l'utilisateur.

Il est également intéressant d'utiliser un bus de données à l'intérieur de l'appareil, par exemple un bus connu sous l'appellation "bus I2-C", qui est notamment prévu pour commander la valeur du contraste.

Si le circuit intégré est prévu pour que l'entrée de la valeur du seuil de limitation de blanc se fasse par l'intermédiaire du bus, le microprocesseur qui pilote l'appareil est avantageusement programmé de façon telle que lorsque l'utilisateur veut régler le contraste, sa commande agit en modifiant la valeur du seuil de limitation du blanc indiquée par le bus.

Si le circuit intégré est prévu pour que que l'entrée de la valeur du seuil de limitation de blanc se fasse par application d'une tension analogique sur une broche, il est alors prévu un circuit pour décoder la commande portée par le bus et l'appliquer à ladite broche.

L'invention concerne également un procédé pour le réglage du contraste dans un appareil de reproduction d'image sur un tube à rayons cathodiques, dans lequel on traite des signaux vidéo, et on compare les valeurs de crête du signal vidéo avec un seuil de référence, de manière à produire un signal de dépassement de ce seuil qui est utilisé, après intégration, pour le réduction automatique du contraste dans le cas où le signal vidéo (l'un au moins des signaux vidéo R, V, B) atteint ledit seuil de référence, caractérisé en ce qu'on utilise un gain nominal assez élevé pour amplifier le signal vidéo de manière à ce que pour la majorité des images reçues, ledit seuil de référence soit atteint, et en ce que, ledit seuil de référence étant variable, on utilise cette variation du seuil en tant que commande manuelle de contraste, mise à la disposition de l'utilisateur.

D'autres particularités, détails et avantages de l'invention seront mis en évidence par la description qui suit en regard des dessins annexés et qui est relative à des exemples non limitatifs, où :
- la figure 1 est un schéma-bloc montrant, de manière générale, l'essentiel des fonctions d'un téléviseur couleurs, pour ce qui concerne le traitement du signal vidéo et le réglage du contraste,
- la figure 2 est un schéma un peu plus détaillé de l'appareil de la figure 1, dans lequel l'invention est mise en oeuvre,
- la figure 3 donne un schéma montrant certains détails de réalisation de l'invention.
- la figure 4 montre schématiquement l'organisation de la commande de contraste dans le cas d'utilisation d'un bus du genre I2-C avec un circuit intégrant la fonction limiteur de blanc.

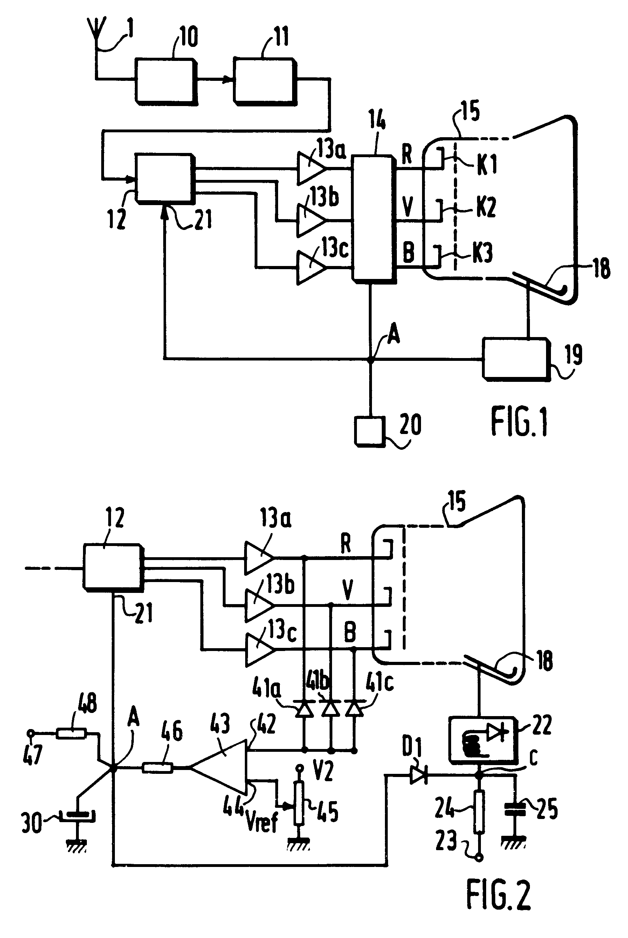

A titre d'appareil de reproduction d'images vidéo, la figure 1 décrit de manière très schématique les fonctions du traitement du signal vidéo d'un téléviseur couleur et plus particulièrement les fonctions qui concernent le réglage du contraste de l'image (voir par exemple le document EP-A-0149334). L'antenne de réception 1 est connectée à un bloc de circuits de traitement du signal radiofréquence 10 à la sortie duquel les signaux sont transmis à un étage d'amplification sélective à fréquence intermédiaire 11 lequel est suivi d'un circuit intégré de traitement de signaux vidéo 12. Les trois signaux de couleur R, V, B issus du circuit de traitement 12 sont appliqués à trois amplificateurs vidéo respectivement 13a, 13b, 13c à la sortie desquels chacun des signaux de couleur est appliqué à chacune des trois cathodes K1, K2, K3 d'un tube à rayon cathodique 15 via un dispositif 14 effectuant la comparaison des valeurs de crête de chacun des signaux vidéo R, V, et B avec un certain seuil de référence de manière à réduire le contraste de l'image et donc l'amplitude des signaux vidéo lorsque ledit seuil de référence est atteint.

L'anode 18 du tube 15 est alimentée en très haute tension par un dispositif 19 qui comporte des moyens de mesure du courant moyen de faisceau du tube 15 pendant le fonctionnement, et compare la valeur de ce courant moyen avec un autre seuil de référence de manière à réduire également le contraste de l'image lorsque cet autre seuil de référence est atteint.

Les signaux de commande de contraste délivrés par les dispositifs 14 et 19 sont réunis à un noeud A, lequel est connecté à la borne de commande de contraste 21 du circuit de traitement 12.

L'appareil schématisé à la figure 1 comporte également un dispositif de réglage manuel du contraste 20 dont le signal de commande de contraste est également délivré au noeud A en vue d'une action sur la même borne de commande de contraste 21 du circuit de traitement 12.

Il est facile d'imaginer que la convergence en un seul point - le noeud A -, de signaux provenant de trois dispositifs spécialisés et fonctionnant dans des conditions différentes, en vue d'une action sur une unique borne de commande 21 pour le contraste de l'image pose de sérieuses difficultés. L'invention propose une solution pour y pallier.

Le schéma de la figure 2 représente une partie de l'appareil de la figure 1 où on a représenté avec plus de détails les dispositifs 14 et 19 pour le contrôle automatique du contraste de l'image. Les éléments de même fonction que ceux de la figure 1 sont affectés des mêmes signes de référence. Les circuits de traitement du signal radiofréquence et l'étage d'amplification à fréquence intermédiaire n'ont pas été représentés.

Le dispositif de comparaison du courant moyen de faisceau du tube image comporte un dispositif combiné 22 transformateur de balayage ligne-générateur THT, délivrant la très haute tension à l'anode 18 du tube 15 tandis que sa tension de référence est fixée par une liaison à une borne 23 soumise à une tension positive déterminée via une résistance de mesure de courant 24.

Le noeud C de connexion entre le dispositif combiné 22 et la résistance de mesure de courant 24 est relié par ailleurs à un condensateur 25, de faible valeur, découplant ce noeud vis-à-vis de la masse, et est également relié à la cathode d'une diode D₁ dont l'anode est reliée au noeud A. La constante de temps du filtre formé par la résistance 24 et le condensateur 25 est choisie, par exemple, pour correspondre à la durée de balayage de quelques lignes à quelques dizaines de ligne d'image.

Le courant délivré à l'anode 18 est mesuré par la résistance de mesure de courant 24 ce qui produit un abaissement de la tension du noeud C par rapport à la tension présentée à la borne 23. Par conséquent, lorsque le courant de faisceau du tube 15 est tel que la tension du noeud C est abaissée, au point de faire conduire la diode D₁, il entraîne un abaissement de la tension au noeud A. Cette action produit une décharge d'un condensateur réservoir 30 découplant le noeud A vers la masse, décharge qui est relativement rapide compte tenu de la valeur de la résistance de mesure de courant 24.Le retour au contraste nominal, lorsque dans une séquence d'image suivante le courant de faisceau est plus réduit, se fait selon une constante de temps plus élevée quand la diode D₁ ne conduit plus. A titre d'exemple, on choisit des conditions pour lesquelles (compte tenu de l'effet du condensateur réservoir 30), la réduction du contraste s'effectue dans un intervalle de temps équivalent à quelques trames d'images (2 à 4 par exemple) alors que le retour au contraste nominal s'effectue après plusieurs images (10 à 20 par exemple). Le circuit de limitatiuon du courant de faisceau décrit ci-dessus n'est pas du tout limitatif, car on peut aussi plcaer la résistance de mesure de courant en série dans les cathodes, et aussi assurer la régulation de courant autrement qu'au moyen du gain video, par exemple par action sur une des grilles du tube.

La figure 2 indique plus en détail de quels éléments est constitué le dispositif 14 pour la comparaison des valeurs de crête de chacun des signaux vidéo R, V, B avec un seuil de référence déterminé. Conformément à la figure 2, ce dispositif comporte trois diodes 41a, 41b, 41c dont les cathodes sont respectivement connectées aux sorties des amplificateurs vidéo, respectivement, 13a, 13b, 13c. Les anodes de ces trois diodes 41a, 41b, 41c sont réunies entre elles et cette liaison est connectée à une première entrée 42 d'un comparateur 43 tandis qu'à l'autre entrée 44 de ce comparateur est appliquée une tension de référence Vref. Comme indiqué sur la figure, la tension de référence Vref peut être obtenue sur le curseur d'un potentiomètre 45 dont les autres bornes sont respectivement connectées à la masse et à une tension déterminée positive. Le comparateur 43 est du type à sortie collecteur ouvert et son courant de sortie est appliqué au noeud A pour la décharge du condensateur réservoir 30 à travers une résistance 46 permettant d'ajuster la constante de temps de décharge. La tension de repos du noeud A qui est appliquée à la borne de commande de contraste 21 du circuit de traitement 12, tension de repos qui est celle produisant le contraste maximum en l'absence de toute action des dispositifs de réglage automatique, est déterminée au moyen d'une autre tension de référence, appliquée à une borne 47 reliée au noeud A via une résistance de charge 48.

Conformément à l'invention, on prévoit que le gain nominal d'amplification des signaux vidéo R, V et B est suffisamment élevé pour que dans la majorité des images reçues, les valeurs de crête des signaux vidéo atteignent le seuil de référence Vref de sorte qu'en général pour ces images le contraste soit automatiquement réglé sous la dépendance du comparateur 43 et c'est le dispositif permettant le réglage de la tension de référence Vref qui constitue le dispositif de réglage manuel du contraste mis à la disposition de l'utilisateur. Ainsi, le dispositif permettant une réduction automatique de contraste qui dans l'art antérieur était uniquement utilisé pour éviter que certaines images contenant des portions trop lumineuses soient reproduites de manière incorrecte est maintenant utilisé également pour assurer un réglage manuel du contraste. Le réglage manuel de contraste maximum correspond à une valeur de la tension Vref la plus proche de la masse c'est à dire la plus éloignée des tensions des signaux R, V et B, correspondant au niveau du noir. Pour une image de contenu vidéo moyen, le comparateur 43 délivre un courant de sortie tel que le contraste soit ajusté pour que les parties les plus lumineuses de l'image soient convenablement reproduites. Pour ce même réglage seules des images de contenu exceptionnellement faible entraîneraient le fait que le comparateur 43 aurait un courant nul en sortie et amènerait le noeud A à une tension égale à l'autre tension de référence. Lorsqu'on augmente la tension Vref, c'est-à-dire qu'on la rapproche de la tension du niveau du noir des signaux R, V et B, l'action résultant du comparateur 43 aboutit à une réduction supplémentaire du contraste pour l'image de contenu vidéo moyen et en outre les images de contenu plus faible se voient affectées d'une réduction de contraste automatique. L'effet résultant pour l'utilisateur est particulièrement satisfaisant.

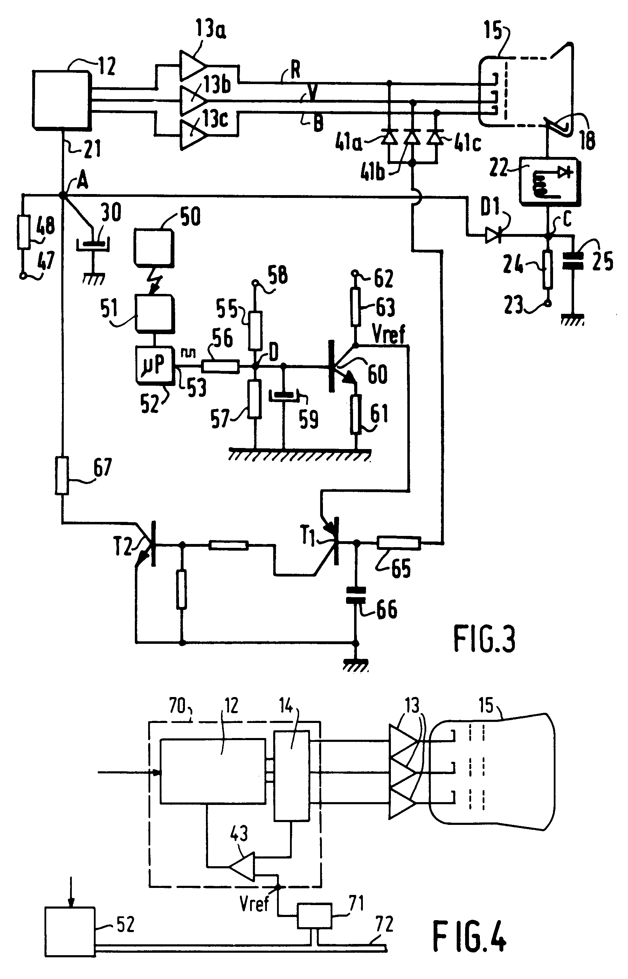

Ainsi que le représente la figure 2 le dispositif de réglage manuel du contraste peut être constitué par un potentiomètre tel que le potentiomètre 45 représenté. Cependant il est souhaitable de pouvoir également obtenir une commande manuelle de contraste utilisant un potentiomètre du type électronique. Une commande de ce type, effectuée à partir d'une télécommande, sera décrite à l'aide de la figure 3. Sur cette figure, les éléments correspondants à ceux de la figure 2 et ayant les mêmes fonctions sont affectés des mêmes signes de référence.

Le schéma de la figure 3 qui est à nouveau relatif à un téléviseur couleur donne un exemple détaillé de réalisation de l'invention en ce qui concerne le dispositif de comparaison des valeurs de crête du signal vidéo avec un seuil de référence, dispositif combiné avec le dispositif de réglage manuel du contraste actionné par télécommande. La télécommande représentée schématiquement par le bloc 50 est d'un type conventionnel, par exemple à transmission par infrarouge, et son organe associé de réception situé dans le téléviseur est représenté en 51. La télécommande 50 comporte une touche pour le réglage manuel du contraste. Le signal correspondant à l'actionnement de la touche de réglage du contraste est acheminé de façon connue en soi sous forme codée vers l'organe récepteur 51 (au même titre que les autres signaux de télécommande) et est transmis à un microprocesseur 52. Le port de sortie 53 du microprocesseur 52 est utilisé pour la production d'un signal de commande du contraste sous la forme de trains d'impulsions rectangulaires dont la largeur varie en fonction de l'ordre reçu par l'organe de réception 51. Ce signal est ensuite transformé en une tension continue dont le niveau dépend de la largeur des impulsions, au moyen d'un réseau de trois résistances 55, 56, 57 et d'un condensateur de forte valeur 59. La branche formant pont diviseur constituée des résistances 55 et 57 est connectée respectivement entre une borne 58 soumise à une tension positive déterminée et la masse. Au point intermédiaire dudit pont diviseur, appelé noeud D, est appliqué le signal de sortie du microprocesseur 52 à travers la résistance 56. La tension obtenue au noeud D est filtrée par le condensateur 59 et peut varier dans une plage que l'on a déterminée en fonction des possibilités de variation de forme du signal de sortie du microprocesseur 52. La tension du noeud D est appliquée à la base d'un transistor NPN 60 servant d'étage amplificateur de tension continue dont l'émetteur est relié à la masse via une résistance d'émetteur 61 et le collecteur relié à une tension positive portée par la borne 62 via une résistance de collecteur 63. Le collecteur du transistor 60 fait apparaître une tension Vref définie comme seuil de référence.

En ce qui concerne le dispositif de comparaison des valeurs de crête du signal vidéo avec ce seuil de référence Vref, la figure 3 en indique un mode de réalisation détaillé. Il comporte un premier transistor T₁ de type PNP dont l'émetteur reçoit la tension Vref, dont la base reçoit le signal de crête de l'un des signaux R, V, B via au moins une des diodes 41a, 41b, 41c et après passage dans un filtre passe-bas à faible constante de temps constitué de la résistance 65 et du condensateur 66. La constante de temps de ce filtre passe-bas est réglée de manière à obtenir un délai de réaction du dispositif de comparaison de valeur convenable, entre autres afin d'éviter que ce dispositif ne réagisse au passage d'un signal parasite très bref. Le courant collecteur du premier transistor T₁ est appliqué à la base d'un deuxième transistor T₂, de type NPN, dont l'émetteur est connecté à la masse et dont le courant collecteur est appliqué au noeud A via une résistance collecteur 67 limitant le courant de décharge du condensateur réservoir 30 et assurant une constante de temps de décharge de valeur convenable. Le condensateur réservoir 30 est par ailleurs chargé à partir d'une autre tension de référence portée par la borne 48, à travers une résistance de charge 48. C'est donc cette autre tension de référence qui fixe la tension pour laquelle la commande de contraste du circuit de traitement 12 produit le contraste maximum de l'image, alors que l'action des deux dispositifs de réglage automatique et du dispositif de réglage manuel produisent tous une réduction du contraste de l'image par abaissement de la tension du noeud A.

Le mode de mise en oeuvre de l'invention décrit jusqu'ici était relatif à un téléviseur couleur. L'invention s'applique également à d'autres appareils de reproduction d'image vidéo (moniteurs) dès lors qu'ils utilisent un circuit de traitement des signaux vidéo muni d'une borne de commande de contraste. L'invention s'applique bien entendu aussi à la reproduction d'image monochrome : il n'y a plus lieu alors de prévoir plusieurs diodes de découplage telles que les diodes 41a, 41b, 41c mais une seule diode.

Par rapport à l'exemple décrit, d'autres variantes peuvent être facilement imaginées sans sortir du cadre de l'invention revendiquée ci-après. Entre autres, le dispositif 14 de la figure 1 pourrait aussi être connecté en amont des amplificateurs 13, à condition de modifier en conséquence la plage de tension dans laquelle peut évoluer le seuil Vref.

Dans le cas où le dispositif 14 de la figure 1 est connecté en amont des amplificateurs 13, il est intéressant d'utiliser un circuit intégré qui réalise la fonction du circuit 12 et du circuit 14 ensemble, et par conséquent aussi la fonction de limiteur de blanc. Deux cas sont alors possibles : soit la valeur du seuil de limitation de blanc réglé par ce circuit intégré est accessible par une broche pour être définie par une tension appliquée de l'extérieur, soit elle est interne et non réglable. Dans le premier cas, la broche de réglage du seuil doit être reliée à la connexion Vref des figures 2 ou 3 et les éléments 41 à 43, 46 de la figure 2 deviennent inutiles, tout comme les éléments 41, T1, T2, 65, 66, 67 de la figure 3. Dans le cas où la valeur du seuil de limitation interne n'est pas accessible, c'est que ce limiteur interne est d'un type seulement destiné à éviter l'écrêtage et son seuil d'action interne correspond à la limite de la dynamique possible : il convient alors de conserver, en plus du circuit intégré, tout le circuit de la figure 2 ou de la figure 3 ; le seuil utilisé par ce dernier circuit est plus bas que celui interne au circuit intégré et de ce fait agit à sa place.

Il peut aussi être prévu un bus pour la transmission de données à l'intérieur de l'appareil, par exemple un bus connu sous l'appellation "bus I2-C", qui est notamment prévu pour commander le réglage de la valeur du contraste. Dans ce cas, l'invention peut toujours être utilisée.

Là encore, les circuits 12 et 14 sont avantageusement intégrés et le circuit intégré peut permettre l'entrée de la valeur de réglage du seuil de limitation du blanc. Il y a alors une alternative :
- soit l'entrée de la valeur de réglage du seuil de limitation du blanc se fait sous la forme d'une valeur analogique introduite sur une broche. La figure 4 illustre ce cas : les références 12, 14, et 43 désignent les mêmes fonctions que dans les figures précédentes, mais maintenant elles sont intégrées dans un seul boitier 70, qui possède une entrée Vref pour le réglage du seuil de la limitation de blanc. Le bus 72 est connecté à un port parallèle du microprocesseur 52, et lorsque ce dernier reçoit une commande de réglage de contraste, il introduit de façon connue les codes correspondants sur le bus 72. Un circuit 71 extérieur au circuit intégré 70 est alors prévu pour décoder la commande portée par le bus, convertir la valeur de contraste désirée en une tension analogique, et l'appliquer à ladite broche Vref (un tel décodeur et convertisseur numérique/analogique est connu en soi).
- soit le circuit intégré 70 est entièrement numérique et l'entrée de réglage du seuil de la limitation de blanc est une entrée numérique. Dans ce cas elle est reliée au bus et il suffit alors de programmer le microprocesseur de façon que lorsque l'utilisateur veut régler le contraste, le microprocesseur place sur le bus le code (l'adresse) prévu pour le réglage de la valeur du seuil de limitation du blanc et non pas celui prévu pour le réglage du contraste. Ainsi l'invention est toujours appliquée puisque le réglage de limitation du blanc prévu pour être fait en usine lors de la fabrication de l'appareil est au contraire mis à la disposition de l'usager et baptisé "réglage de contraste".

Si le circuit intégré comporte un seuil de limitation non réglable, il convient de conserver, en plus du circuit intégré, une bonne partie du circuit de la figure 3. Il y a là encore une alternative :
- on peut établir en permanence sur le bus la valeur numérique pour le réglage du contraste, de façon qu'elle procure le contraste maximal, ce qui est une manière de mettre hors circuit le réglage normalement prévu. En parallèle, les moyens tels que décrits à propos des figures 2 et 3 sont employés, c'est-à-dire que la touche de commande de contraste de la télécommande 50 n'agit pas par l'intermédiaire du bus, mais comme décrit plus haut à propos de la figure 3.
- On peut aussi supprimer le dispositif 53-59 de la figure 3, établir sur le bus la valeur Vref de contraste souhaitée par l'utilisateur, et comme dans le cas de la figure 4 avec les éléments 52, 72, 71, fabriquer la valeur et l'appliquer à la base du transistor 60 de la figure 3, le circuit de cette figure 3 restant inchangé à l'exception des éléments 53-59 remplacés par les éléments 72, 71 de la figure 4.

## Revendications

1. Appareil de reproduction d'image sur un tube à rayons cathodiques, muni d'une part d'un circuit de traitement des signaux vidéo assurant, entre autres, une préamplification de ces signaux soit avec un gain maximal déterminé, soit avec un gain réduit par rapport au gain maximal dans le but de modifier le contraste de l'image, au moyen d'une tension de commande variable appliquée à une borne de commande de contraste dudit circuit de traitement, appareil muni d'autre part d'un circuit de contrôle du contraste comprenant :
- un dispositif de comparaison des valeurs de crête du signal vidéo avec un seuil de référence, le signal issu du dépassement de ce seuil étant appliqué, après intégration, à ladite borne de commande de contraste,
- un dispositif de réglage manuel du contraste délivrant un signal également appliqué à ladite borne de commande de contraste, caractérisé en ce que le gain nominal d'amplification du signal vidéo est suffisamment élevé pour que, pour la majorité des images reçues, les valeurs de crête du signal vidéo (de chacun des signaux vidéo R, V, B,) atteignent ledit seuil de référence, et en ce que ledit seuil de référence étant réglable, la commande de variation de ce seuil constitue le dispositif de réglage manuel du contraste.

2. Appareil selon la revendication 1, caractérisé en ce que le dispositif de réglage manuel du contraste comprend un microprocesseur délivrant des trains d'impulsions rectangulaires, ces impulsions rectangulaires fournissant après filtration et amplification ledit seuil de référence.

3. Appareil selon la revendication 2 comportant une télécommande, caractérisé en ce que cette télécommande est munie d'au moins une touche de commande de variation de contraste, et en ce que les trains d'impulsions rectangulaires délivrés par le microprocesseur sont modifiés en réponse à l'action sur ladite touche de commande, au moyen du signal transmis par la télécommande.

4. Appareil selon l'une quelconque des revendications précédentes, comportant un circuit intégré video muni d'un limiteur de blanc intégré dont la valeur du seuil de limitation de blanc peut être définie à partir de l'extérieur, caractérisé en ce qu'il est muni de moyens pour faire varier ladite valeur du seuil en relation avec l'actionnement de la commande de contraste par l'utilisateur.

5. Appareil selon la revendication 4, muni d'un bus pour la transmission de données à l'intérieur de l'appareil, et dont le circuit intégré est prévu pour que l'entrée de la valeur du seuil de limitation de blanc se fasse par l'intermédiaire du bus, caractérisé en ce que le microprocesseur qui pilote l'appareil est programmé de façon telle que lorsque l'utilisateur veut régler le contraste, sa commande agit en modifiant la valeur du seuil de limitation du blanc indiquée par le bus.

6. Appareil selon la revendication 4, muni d'un bus pour la transmission de données à l'intérieur de l'appareil, et dont le circuit intégré est prévu pour que l'entrée de la valeur du seuil de limitation de blanc se fasse par application d'une tension analogique sur une broche, caractérisé en ce qu'il est prévu un circuit pour décoder la commande portée par le bus et l'appliquer à ladite broche.

7. Procédé pour le réglage du contraste dans un appareil de reproduction d'image sur un tube à rayons cathodiques, dans lequel on traite des signaux vidéo, et on compare les valeurs de crête du signal vidéo avec un seuil de référence, de manière à produire un signal de dépassement de ce seuil qui est utilisé, après intégration, pour la réduction automatique du contraste dans le cas où le signal vidéo (l'un au moins des signaux vidéo R, V, B) atteint ledit seuil de référence, caractérisé en ce qu'on utilise un gain nominal assez élevé pour amplifier le signal vidéo de manière à ce que pour la majorité des images reçues, ledit seuil de référence soit atteint, et en ce que, ledit seuil de référence étant variable, on utilise cette variation du seuil en tant que commande manuelle de contraste, mise à la disposition de l'utilisateur.

## Claims

1. An apparatus for reproducing an image on a cathode-ray tube, including a video signal processing circuit ensuring inter alia a preamplification of the video signal either with a given maximum gain or a reduced gain with respect to the maximum gain to modify the image contrast, by means of a variable control voltage applied to a contrast control terminal of said processing circuit, the apparatus also including a contrast control circuit, comprising
- a device for comparing peak values of the video signal with a reference threshold, the signal supplied when this threshold is exceeded, being applied after integration, to said contrast control terminal,
- a manual contrast adjustment device for supplying a signal which is also applied to said contrast control terminal, characterized in that the nominal gain of the amplification of the video signal is adequately high to provide that, for the majority of the received images, the peak values of the video signal (of each video signal R (red), V (green) and B (blue) reach said reference threshold, and in that, with said reference threshold being adjustable, variation control means of this threshold constitute the manual contrast adjusting device.

2. An apparatus as claimed in Claim 1, characterized in that the manual contrast adjusting device comprises a microprocessor for supplying square-wave pulse trains, these square-wave pulses constituting said reference threshold after filtering and amplification.

3. An apparatus as claimed in Claim 2, comprising a remote control, characterized in that this remote control is provided with at least one contrast variation control button, and in that the square-wave pulse trains produced by the microprocessor are modified in response to the action of said control button, by means of the signal transmitted by the remote control.

4. An apparatus as claimed in any one of the preceding Claims, including an integrated video circuit provided with a white limiter whose white limit threshold value can be defined from the exterior, characterized in that means are provided for having said threshold value vary in relation to operating the contrast control by the user.

5. An apparatus as claimed in Claim 4, provided with a bus for data transmission within the apparatus, whose integrated circuit is provided to ensure that inputting the white limit threshold value is effected via the bus, characterized in that the microprocessor which drives the apparatus is programmed in such a manner that when the user wants to readjust the contrast its control acts by modifying the value of the white limit threshold indicated by the bus.

6. An apparatus as claimed in Claim 4, provided with a bus for data transmission within the apparatus, whose integrated circuit is provided to ensure that inputting the white limit threshold value is effected by applying an analog voltage to a plug, characterized in that a circuit is provided for decoding the command carried by the bus and to apply it to said plug.

7. A method of adjusting the contrast in an image reproducing apparatus on a cathode-ray tube, in which video signals are processed, and the peak values of the video signal are compared with a reference threshold in such a manner that automatically reducing the contrast in the case where the video signal (at least one of the video signals R, G, B) reaches said reference threshold, characterized in that a nominal gain is used which is high enough to amplify the video signal in such a way that said reference threshold is reached for the majority of the received images and in that, with said reference threshold being variable, this threshold variation is used as manual contrast control, put at the user's disposal.

## Patentansprüche

1. Vorrichtung zum Wiedergeben eines Bildes an einer Elektronenstrahlröhre mit einer Video-Signalverarbeitungsschaltung, die u.a. eine Vorverstärkung des Video-Signals entweder mit einer bestimmten maximalen Verstärkung oder mit einer verringerter Verstärkung gegenüber der maximalen Verstärkung gewährleistet zum Ändern des Bildkontrastes mittels einer einer Kontraststeuerklemme der genannten Verarbeitungsschaltung zugeführten veränderlichen Steuerspannung, wobei diese Vorrichtung weiterhin eine Kontraststeuerschaltung aufweist, welche die nachfolgenden Elemente umfaßt:
- eine Anordnung zum Vergleichen von Spitzenwerten des Video-Signals mit einer Bezugsschwelle, wobei ein Signal das abgegeben wird wenn diese Schwelle überschritten wird, nach Integration, der genannten Kontraststeuerklemme zugeführt wird,
- eine handmäßige Kontrasteinstellvorrichtung zum Liefern eines Signals, das ebenfalls der genannten Kontraststeuerklemme zugeführt wird, dadurch gekennzeichnet, daß die Nennverstärkung der Verstärkung des Video-Signals entsprechend hoch ist um zu gewährleisten, daß für die meisten empfangenen Bilder der Spitzenwert des Video-Signals (jedes Video-Signals R (rot), V (grün), B (blau)) die genannte Bezugsschwelle erreicht, und daß durch die Tatsache, daß die genannte Bezugsschwelle regelbar ist, Änderungsregelmittel dieser Schwelle die handmäßige Kontrastregelvorrichtung bilden.

2. Vorrichtung nach Anspruch 1, dadurch gekennzeichnet, daß die handmäßige Kontrastregelvorrichtung einen Mikroprozessor aufweist zum Liefern von Rechteckimpulsfolgen, die nach Filterung und Verstärkung die genannte Bezugsschwelle bilden.

3. Vorrichtung nach Anspruch 2 mit einer Fernsteuerung, dadurch gekennzeichnet, daß diese Fernsteuerung mindestens eine Kontraständerungsregeltaste aufweist und daß die vom Mikroprozessor gelieferten Rechteckimpulsfolgen in Antwort auf die Betätigung der genannten Regeltaste mittels des von der Fernsteuerung ausgesendeten Signals geändert werden.

4. Vorrichtung nach einem der vorstehenden Ansprüche, mit einer integrierten Video-Schaltung mit einem Weißbegrenzer, dessen Weiß-Begrenzungsschwellenwert von außen definiert werden kann, dadurch gekennzeichnet, daß Mittel vorgesehen sind, die den genannten Schwellenwert in bezug auf die Betätigung der Kontrastregelung durch den Gebraucher ändern.

5. Vorrichtung nach Anspruch 4 mit einem Bus für Datenübertragung innerhalb der Vorrichtung, dessen integrierte Schaltung dazu vorgesehen ist, zu gewährleisten, daß das Eingeben des Weiß-Begrenzungsschwellenwertes über den Bus erfolgt, dadurch gekennzeichnet, daß der Mikroprozessor, der die Vorrichtung betreibt, derart programmiert wird, daß im Falle der Gebraucher den Kontrast neu-einstellen möchte, diese Regelung stattfindet durch Änderung des Wertes der durch den Bus angegebenen Weiß-Begrenzungsschwelle.

6. Vorrichtung nach Anspruch 4 mit einem Bus für Datenübertragung innerhalb der Vorrichtung, dessen integrierte Schaltung dazu vorgesehen ist, zu gewährleisten, daß das Eingeben des Weiß-Begrenzungsschwellenwertes dadurch erfolgt, daß einem Stecker eine analoge Spannung zugeführt wird, dadurch gekennzeichnet, daß eine Schaltungsanordnung vorgesehen ist zum Decodieren des vom Bus getragenen Befehls und zum Zuführen desselben zu dem genannten Stecker.

7. Verfahren zum Einstellen des Kontrastes in einer Bildwiedergabevorrichtung mit einer Elektronenstrahlröhre, wobei Video-Signale erzeugt werden und wobei die Spitzenwerte des Video-Signals mit einer Bezugsschwelle verglichen werden und zwar derart, daß bei Überschreitung dieser Schwelle ein Signal erzeugt wird, das nach Integration zur automatischen Verringerung des Kontrastes benutzt wird, und zwar in dem Fall, wo das Video-Signal (wenigstens eines der Video-Signale R (rot), V (grün), B (blau)) die genannte Bezugsschwelle erreicht, dadurch gekennzeichnet, daß eine Nennverstärkung benutzt wird, die hoch genug ist um das Video-Signal derart zu verstärken, daß die genannte Bezugsschwelle von den meisten der empfangenen Bilder erreicht wird, und daß bei veränderlicher Bezugsschwelle diese Schwellenänderung als dem Gebraucher zur Verfügung stehende, handmäßige Kontrastregelung benutzt wird.
